# EUROPEAN PATENT APPLICATION

(11) **EP 1 748 144 A2**
(43) Date of publication of application: **31.01.2007**
(21) Application number: 06253888.9
(22) Date of filing: 25.07.2006
(51) Int. Cl.: E06B 9/262, A47H 1/19, F16G 11/04

(54) **Cord anchor**

(30) Priority: 26.07.2005 EP 05076718
(71) Applicant: HUNTER DOUGLAS INDUSTRIES B.V., 3071 EL Rotterdam (NL)
(72) Inventor: Lamers, Franciscus Cornelis Gerardus, 6431 XC Hoensbroek (NL); Wetsema, Jan Pieter, 3038 EC Rotterdam (NL)
(74) Representative: Smith, Samuel Leonard

(57) **Abstract**

Cord anchor (15, 115) for attaching a pull cord (7, 9, 11, 107) to a window covering (1), comprising a connector (17, 117) for attaching the anchor to the covering, a holder (19, 119) for connecting the pull cord to the anchor and a clamp (21, 121) for releasably holding the pull cord on the holder (19,23). The holder (19, 119) and the clamp (21, 121) comprise a plug (23, 123) and socket (41, 141) combination and the connector is on either the holder or the clamp.

## Description

This invention relates to an anchor for a pull cord of a window covering, such as a roman shade, horizontal venetian blind or the like, which allows the length of the pull cord to be adjusted.

A conventional Roman shade has a fabric shade or curtain panel which is attached to a header or head rail at the top and which can be pulled up by pull cords that are connected to a bottom portion of the panel or to a bottom bar. The pull cords are threaded through loops, rings or the like on the panel from top to bottom. Generally, a plurality of pull cords are spaced apart and parallel to each other along the length of the panel and extend from the bottom of the panel or the bottom bar to the head rail. Each pull cord is threaded through a plurality of rings, loops or the like, which are attached to the panel in vertically aligned and vertically spaced apart, parallel columns spaced apart along the length of the panel. The lower end of each pull cord is attached by a bottom knot to a ring, loop or the like on the bottom of the panel or to the bottom bar. The upper end can be routed through the head rail or through a top row of rings, loops or the like and then extend lengthwise along one side of the panel to function as an operating cord end. The upper ends of a plurality of pull cords can thus be routed to one lengthwise side of the shade and be bundled to function as an operating cord for the shade, or a separate operating cord can be attached to the bundle of pull cords. Pulling the operating cord or the pull cords directly will raise the Roman shade. Alternatively the upper end of each pull cord can be attached to a cord winding spool in the head rail, so that rotation of the winding spool will wind or unwind the pull cords and lift or lower the shade.

In order that the panel hangs properly with its pull cords and its columns of rings, loops or the like extending vertically, the effective length of each pull cord relative to the panel and the other pull cords has to be carefully determined and set by the position of its bottom knot. If necessary, the length of each pull cord has to be adjusted by correcting the position of the bottom knot in relation to the length of the pull cord, the position of its bottom ring and the positions of the lower ends of the other pull cords.

A conventional horizontal venetian blind has a plurality of horizontal blind slats. The slats are attached to a head rail by ladder cords and include a bottom slat or bottom rail supported by the ladder cords. The bottom slat or rail can be pulled up by pull cords that are connected to the bottom slat or rail and are threaded through the other slats up to the head rail. Generally, a plurality of pull cords are spaced apart and parallel to each other along the length of the slats and extend from the bottom slat or rail to the head rail. The lower end of each pull cord is attached by a bottom knot to the bottom slat or rail. The upper end is routed through vertically-aligned holes in the slats to the head rail and extends lengthwise to one side of the blind to function as an operating cord end. A plurality of pull cords can thus be routed to one lengthwise side of the blind and be bundled by a so-called cord equalizer to function as an operating cord, or a separate operating cord can be attached to the bundle. Pulling the operating cord or the pull cords directly will raise the blind. Alternatively, the top end of each pull cord can be attached to a cord winding spool in the head rail, so that rotation of the winding spool will wind or unwind the pull cords and lift or lower the blind.

In order that the blind hangs properly with its pull cords and ladder cords extending vertically, the effective length of each pull cord relative to the height of the blind and the other pull cords has to be carefully determined and set by the position of its bottom knot. If necessary, the length of each pull cord has to be adjusted by correcting the position of the bottom knot in relation to the length of the pull cord, the position of the bottom slat or rail and the positions of the lower ends of the other pull cords.

Anchors are known which can be attached to one end of a pull cord of a window covering to allow for easy attachment of the pull cord to a bottom portion of the covering, thereby obviating the need to knot the pull cords to the covering. Such anchors can also allow the effective length of the pull cord to be easily adjusted. See, for example, DE 299 22 954U and DE 102 44 033 which have a hook for attachment to a ring, loop or the like at the bottom of a covering and a clamp that can hold the pull cord and that can be disengaged from the cord in order to adjust its length.

The cord anchor of DE 299 22 954U includes a base (1) with a hook (6) and a cord opening (4) in the base near the hook, through which a pull cord (3) is laced. This anchor also includes a clamp in the form of a screw (5) which is screwed into a blind hole in the base (1). The blind hole is perpendicular to the opening (4) and opens out into the opening (4), so that the pull cord (3), when threaded through the opening (4), can be clamped between the tip of the screw (5) and an inner wall of the base. The clamping action of the screw (5) depends on the extent to which the screw is turned into the base (1).

The cord anchor of DE 102 44 033 includes a base (5) with a hook (6) and a cord opening (4) extending through the base, through which a pull cord (2) is laced. A second or blind hole is provided in the base (5), that is perpendicular to and crosses the opening (4) and that ends at an inner wall of the base. Figure 2 of DE 10244033 shows the anchor as including a spring loaded pin (10) for holding the cord in place, the pin having a, opening, through which the cord can be threaded through the pin. A spring (11) is located at the end of the pin (10) and at the end of the second opening and biases the pin outwardly such that the cord (2), which is threaded through the base and the pin, is clamped between the base (5) and the pin.

The clamps in these anchors act on the pull cords in a direction perpendicular to the direction in which the cords are threaded through the anchors. The clamps can engage the cords to prevent them from moving or can be disengaged from the cords to allow the engaged lengths of the cords to be adjusted.

However, these anchors are relatively bulky because of the perpendicular openings in their base, needed for their clamping action. Also in the anchor of DE 29922954U, its clamping action depends upon a user screwing its screw sufficiently tight, which creates the risk that the anchor will fail if its screw is not carefully tightened. In the anchor of DE 10244033, its attachment to a cord is not simple because the cord has to be laced or threaded through its pin. Also, its spring represents an additional part which is an extra cost.

It is therefore an object of the invention to provide a cord anchor which is smaller and simpler, so that it can be laced through the rings, loops or the like of a Roman shade or the openings in the slats of a venetian blind. Secondly, it is an object of the invention to provide a cord anchor which allows the length of a pull cord, held by the anchor, to be adjusted in a simple manner, and without the risk that the cord will not be tightly held by the anchor. Thirdly, it is an object of the invention to provide a cord anchor that is easy to assembly and use.

These objects are realized by an anchor of this invention for attaching a pull cord to a window covering, which comprises a connector for attaching the anchor to the covering, a holder for connecting the pull cord to the anchor and a clamp for releasably holding the pull cord on the holder and wherein the holder and clamp comprise a plug and socket combination and the connector is on either the holder or the clamp.

According to one aspect of the invention, the holder comprises the plug, the clamp comprises the socket, and the plug fits snugly into the socket.

Advantageously, the plug can be positioned in the socket in at least a first or cord-engaging position and a second or cord-adjusting position.

According to a second aspect of the invention, the holder or the clamp, which comprises the plug, includes a channel for receiving the cord. Advantageously, the channel is a U-shaped channel comprising a transverse, generally horizontal leg and a pair of generally vertical legs that are upstanding at the ends of the horizontal leg. Particularly advantageously, the cross-section of the vertical legs is U-shaped. More particularly, the channel has friction enhancing means.

According to another aspect of the invention, a roman shade is provided comprising: a panel having a top attached to a header and a bottom; at least one pull cord attached at the bottom by an anchor, which includes a connector for attaching the anchor to the bottom, a holder for connecting the pull cord to the anchor and a clamp for releasably holding the pull cord on the holder and wherein the holder and clamp comprise a plug and socket combination and the connector is on either the holder or the clamp.

Further aspects of the invention will be apparent from the detailed description below of particular embodiments and the drawings thereof, in which:
- Figure 1 is a perspective view of a roman shade with the cord anchor of the invention;
- Figure 2 is an exploded view of the anchor of Figure 1;
- Figure 3 is a side view of the holder of the anchor of Figure 1;
- Figure 4 is a cross-section of the clamp of the anchor of Figure 1;
- Figure 5A is a cross-section of the anchor of Figure 1 in a closed position, engaging a pull cord attached thereto;
- Figure 5B is a cross-section of the anchor of Figure 1 in a partially open position, disengaged from a pull cord attached thereto; and
- Figure 6 is a schematic cross-section of a second embodiment of the cord anchor of the invention.

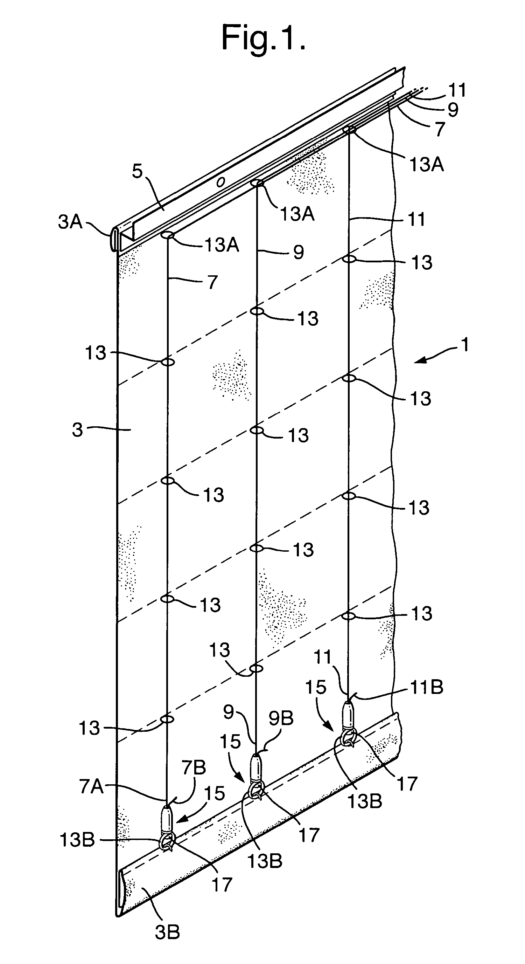

Figure 1 shows a roman shade 1 with a fabric panel 3, having a top rim 3A for attachment to a header 5, pull cords 7, 9, 11 threaded through parallel, vertically-extending columns of rings 13 on rear of the panel 3. A cord anchor 15 of this invention is on the lower portion 7B, 9B, 11B of each pull cord 7, 9, 11. Each anchor 15 includes a hook 17 for attachment to a bottom ring 13B of each column of rings 13 near a bottom rim 3B of the shade 3.

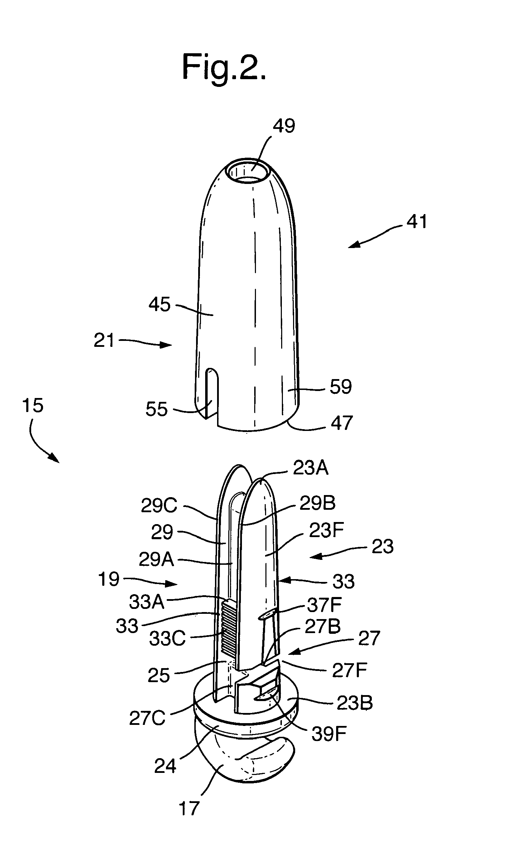

Figures 2-4 show the cord anchor 15 to have two separable parts: a holder 19 for one of the pull cords 7, 9, 11, with the hook 17 extending downwardly from the holder; and a clamp 21 for releasably holding the pull cord on the holder. The holder 19 and clamp 21 form a plug and socket combination. In this regard, an upper portion or plug 23 of the holder 19 has a vertically-elongated and rounded finger-like shape that is adapted to be inserted into the clamp 21 as described below. A lower portion 24 of the holder 19 is attached to the hook 17.

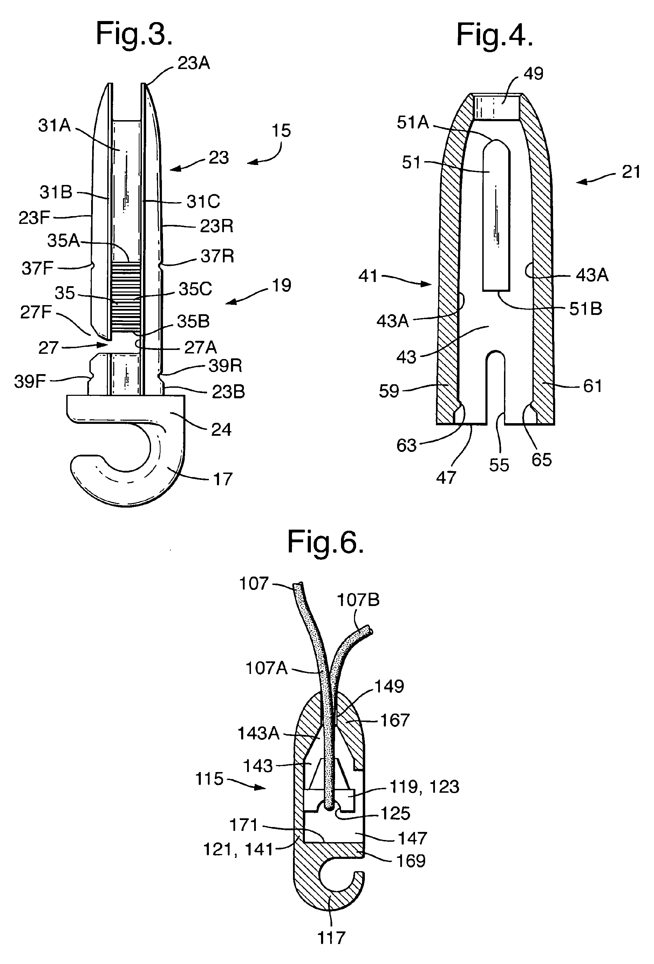

As best seen in Figure 3, the upper portion or plug 23 of the holder 19 has a top 23A and a bottom 23B, and within the holder is a channel 25 for receiving, and accommodating movement of, one of the pull cords 7, 9 , 11. The channel 25 is generally U-shaped and has, at its bottom, a transverse, generally horizontal leg 27 that is adjacent to the bottom 23A of the plug 23 and extends through the plug from left to right as shown in Figure 2. The channel 25 also has left and right, generally vertical legs 29, 31 that are upstanding at the left and right ends of the horizontal leg 27 and are open at the surface of the plug 23, on its left and right sides. Thus, the vertical channel legs 29, 31 divide the plug 23 into a front wall 23F and a rear wall 23R as shown in Figure 2, and the horizontal and vertical channel legs 27, 29, 31 are preferably centered between the plug's front and rear walls 23F, 23R.

The legs 27, 29, 31 are interconnected and together form the U-shaped channel 25 for a pull cord in the plug 23 of the holder 19. The left and right, vertical legs 29, 31 each have a generally U-shaped cross-section with an upstanding base 29A, 31A, horizontally-extending, parallel walls 29B, 31B, 29C, 31C extending perpendicularly from left and right sides of its base 29A, 31A and an open top. The horizontal leg 27 has a generally square cross-section with a upstanding rear base wall base 27A, horizontal top and bottom walls 27B, 27Cand an upstanding front opening 27F. The front opening 27F is in the front wall of the plug 23F, so that a pull cord can be inserted in the horizontal channel leg 27.

Preferably, the left and right, channel bases 29A, 31A have left and right, friction blocks 33, 35. The friction blocks 33, 35 are generally rectangular projections in the vertical channel legs 29,31. Each friction block 33, 35 includes a top surface 33A, 35A, a bottom surface 33B, 35B and an outer surface 33C, 35C that is parallel to the upstanding base 29A, 31A of its vertical leg 29, 31, so that the vertical legs are relatively shallow where the friction blocks 33, 35 are located. The outer surface 33C, 35C of each friction block preferably has a friction enhancing surface F, such as a saw-tooth profile, to better hold a pull cord in place. The friction blocks 33, 35 are preferably near the bottom of the vertical channel legs 29, 31 and level with, or just above, the horizontal channel leg 27.

The plug 23 of the holder 19 also has upper and lower, front latching notches 37F, 39F and upper and lower, rear latching notches 37R, 39R. The upper and lower notches 37F, 37R and 39F, 39R are parallel and vertically spaced apart horizontally-extending grooves in the front and rear walls 23F, 23R. The front upper notch 37F is positioned over the transverse horizontal leg 27 of the channel 25 and at the same level, or just above, the top portion 33A, 35A of the left and right friction blocks 33, 35. The front bottom notch 39F is located just below the horizontal channel leg 27. The rear upper and lower notches 37R, 39R are vertically aligned with the front upper and lower notches 37F, 39F. The distance between each pair of upper and lower notches 37F, 39F and 37R, 39R is thus at least equal to the sum of the vertical heights of the friction blocks 33, 35 and the horizontal channel leg 27.

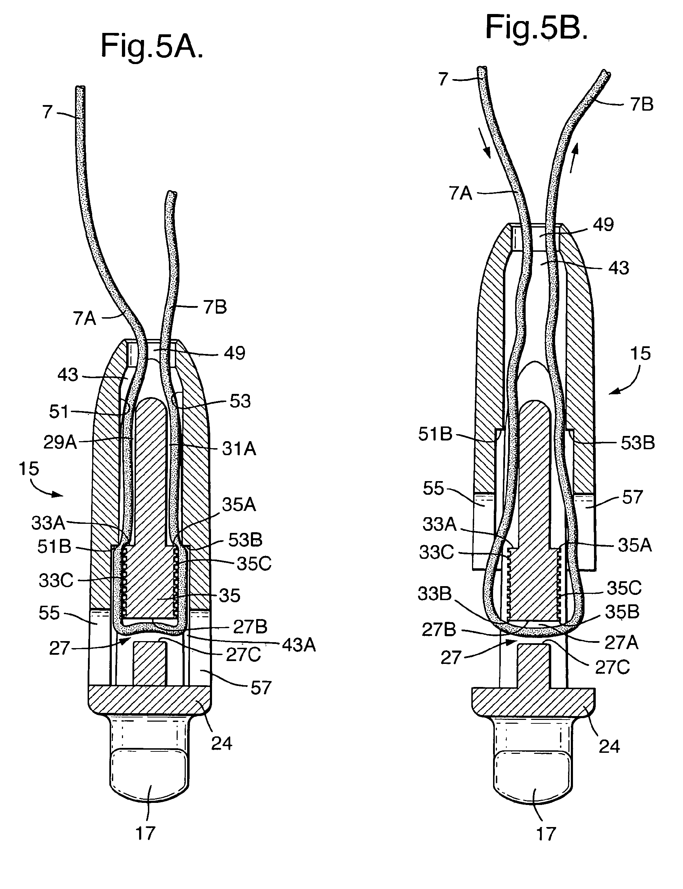

As shown in Figures 5A and 5B, one of the pull cords 7 can be looped about the plug 23 of the holder 19 and inserted in its channel 25. This can be done by first inserting a portion of the pull cord 7 through the open portion of the opening 27F of the horizontal channel leg 27 at the front of the plug 23, so that the pull cord is positioned in the horizontal leg 27, and then folding upwardly other portions of the pull cord, extending from opposite ends of the horizontal leg 27, so that the other portions are positioned in the vertical channel legs 29, 31. The pull cord positioned in the cord channel 25 can slide then along it when pulled at either end to adjust the length of the pull cord.

As best seen in Figure 4, the clamp 21 for releasably holding a pull cord on the holder 19 includes a hollow, vertically-elongated socket 41, into which the plug 23 can be inserted and removed vertically . The socket 41 has a hollow, vertically-elongated and rounded interior 43 which fits closely around the exterior of the plug 23 when it is inserted in the socket 41 . The socket 41 also has an outer wall 45, a bottom opening 47, through which the plug 23 can be vertically inserted into, and removed from, the hollow interior 43 of the plug, and a top opening 49, through which the ends of the pull cord can extend. The hollow interior 43 of the socket 41 has a pair of inwardly- and vertically-extending ribs 51, 53, on opposite sides of the hollow interior surface 43A of the socket 41. Preferably the top 51A, 53A of each rib 51, 53 is adjacent the top opening 49, and the bottom 51B, 53B of each rib is at approximately the middle of the height of the socket 41. The ribs 51, 53 are positioned and dimensioned so that when the plug 23 of the holder 19 is inserted in the hollow interior 43 the socket 41, the ribs 51, 53 slide along the vertical channel legs 29, 31 of the plug. A pair of slots 55, 57 also extend through opposite sides of the outer wall 45 of the socket 41, beneath the ribs 51, 53. The slots 55, 57 extend upwardly from the bottom opening 47 along a portion of the height of the outer wall 45 of the socket 41. The slots 55, 57 create front and rear latches 59, 61 at the bottom of the socket 41 that can be flexed slightly inwardly and outwardly when the plug 23 of the holder 19 is inserted in the hollow interior 43 of the socket 41. The latches 59, 61 have cams 63,65 projecting horizontally into the hollow interior from inner surfaces that can resiliently engage either the upper or lower notches 37F, 39F or 37R, 39R in the front and rear walls 23F, 23R of the plug 23 of the holder 19 when the plug is inserted in the hollow interior 43 of the socket 41, thereby securing the clamp on the holder.

The clamp 21 and its socket 41 can be held on the plug 23 of the holder 19 of the cord anchor 15 in two positions: a cord-engaging position shown in Figure 5A and a cord-adjusting position shown in Figure 5B. In both positions, one of the pull cords 7 and enters the anchor through the top opening 49 in the socket 41, passes around the plug 23 through its channel 25, past the friction blocks 33, 35 and exits the anchor through the top opening 49 with end portion 7B. There are thus has two portions of the pull cord 7 extending upwardly from the top opening 49, its end portion 7B and an extending length 7A as a portion of the whole pull cord 7. In the cord-adjusting position of the cord anchor, a length of the pull cord 7 can be slid through the anchor to: reduce the effective length of the pull cord when its end portion 7B is pulled or to increase its effective length when its other extending length 7A is pulled.

As seen in Figure 5A, the plug 23 of the holder 19 has been inserted to a maximum extent upwardly into the hollow interior 43 of the socket 41, so that the cord anchor 15 is in its cord-engaging position. Thereby, the latches 63, 65 of the clamp 21 have been pushed into the lower, front and rear, notches 39F, 39R on the front and rear walls 23F, 23R of the plug. As a result, the ribs 51, 53 are directly adjacent the top surfaces 33A, 35A of the friction blocks 33, 35 in the left and right, vertical legs 29, 31 of the channel 25. Also as a result, the pull cord 7 is held at two places, between the bottom ends 51 B, 53B of the ribs and the top surfaces 33A, 35A of the friction blocks 33, 35. Also, the pull cord is held by friction between the friction enhancing surface F of the outer surfaces 33C, 35C of the friction blocks 33, 35 and the hollow interior surface 43A of the clamp, below the bottom ends 51 B, 53B of the ribs 51, 53. In this regard, the dimensions of the ribs 51, 53, the cord channel 25 and the friction blocks 33, 35 are chosen such that in the cord-engaging position: i) the vertical distances between the bottom ends 51 B, 53B of the ribs and the top surfaces 33A, 35A of the friction blocks are smaller than the thickness of the pull cord 7; and ii) the horizontal distances between the outer surfaces 33C, 35C of the friction blocks and the hollow interior surface 43A of the clamp, below the bottom ends 51 B, 53B of the ribs 51, 53, are also smaller than the thickness of the pull cord.

As seen in Figure 5B, the plug 23 has been inserted only to a partial extent upwardly into the hollow interior 43 of the socket 41, so that the cord anchor 15 is in its cord-adjusting position. Thereby, the latches 63, 65 of the clamp have been pushed into the upper, front and rear, notches 37F, 37R on the front and rear walls 23F, 23R of the plug. As a result, the bottom ends 51 B, 53B of the ribs 51, 53 are above the top surfaces 33A, 35A of the friction blocks. The ribs 51, 53 are thus in the vertical channel legs 29, 31 and directly opposite their upstanding base 29A, 31A. The horizontal distances between the bases 29A, 31A of the vertical channel legs 29, 31 and the ribs 51, 53 of the socket 41 are such that the pull cord 7 can slide along the cord channel 25.

Figure 6 shows a second embodiment of a cord anchor 115 of the invention which is similar to the cord anchor 15 of figures 1-5 and for which corresponding reference numerals (greater by 100) are used below for describing the same parts or corresponding parts.

The anchor 115 has two separable parts: a holder 119 for a pull cord 107; and a clamp 121 for releasably holding the pull cord on the holder. A hook 117 extends downwardly from the holder. The holder 119 and clamp 121 form a plug and socket combination. In this regard, the holder 119 has an upper portion or plug 123 that has a vertically-elongated and rounded shape with a generally conical cross-section. The plug 123 also has a U-shaped channel 125 for the pull cord 107.

An upper portion 167 of the clamp 121 includes a hollow, vertically-elongated socket 141. A lower portion 169 of the clamp 121 is attached to the hook 117. The socket 141 has a top opening 149, through which the ends of the cord can extend, and a bottom opening 147, through which the plug 123 can be inserted into, and removed from, the hollow interior 143 of the socket. The upper part of the hollow interior 143 of the socket 141 is shaped, so that the upper part of the plug 123 can be moved upwardly to fit snugly there to hold the pull cord 107 in place in a cord-engaging position of the cord anchor 115 . The hollow interior 143 of the socket 141 is also vertically long enough for the plug 123 to be moved downwardly to a top surface 171 of the upper portion 167 of the clamp 121 to a cord-adjusting position shown in Figure 6. In the cord-adjusting position, the pull cord 107 can be slid through the anchor 115 to: reduce its effective length when its end portion 107B is pulled or to increase its effective length when its other extending length 107A is pulled.

This invention is, of course, not limited to the above-described embodiments which may be modified without departing from the scope of the invention or sacrificing all of its advantages. In this regard, the terms in the foregoing description and the following claims, such as "horizontal", "vertical", "right", "left", "front", "rear", "top", "bottom", "outer", "inner", have been used only as relative terms to describe the relationships of the various elements of the cord anchor of the invention as shown in the Figures.

For example, instead of the open horizontal leg 27, 127 of the channel 25, 125 with its open entrance 27F, 127F at the front, a through hole could be provided in the left and right sides of the plug 23,123 of the holder 19, 119.
Also for example, the cord anchor of this invention could alternatively be used to attach a pull cord to a bottom rail of a horizontal venetian blind. In such a case, an altemative to the hook 17, 117 would be used for connecting the anchor to the shade, such as a bayonet closure.

## Claims

1. Cord anchor (15, 115) for attaching a pull cord (7, 9, 11, 107) to a window covering (1), comprising:
- a connector (17, 117) for attaching the anchor to the covering;
- a holder (19, 119) for connecting the pull cord to the anchor; and
- a clamp (21, 121) for releasably holding the pull cord on the holder (19,23);
- wherein the holder (19, 119) and the clamp (21, 121) comprise a plug (23, 123) and socket (41, 141) combination and the connector is on either the holder or the clamp.

2. The cord anchor of claim 1 wherein the holder (19, 119) comprises the plug (23, 123) and the clamp (21, 121) comprises the socket (41, 141) and the plug fits snugly into the socket.

3. The cord anchor of claim 1 or 2 wherein the plug (23, 123) can be positioned in the socket (41, 141) in at least a first or cord-engaging position and a second or cord-adjusting position.

4. The cord anchor of claim 2 or 3 wherein the holder (19, 119) or the clamp (21, 121), which comprises the plug (23, 123) includes a channel (25) for receiving the pull cord.

5. The cord anchor of claim 4 wherein the channel (25) is a U-shaped channel comprising a transverse, generally horizontal leg (27) and a pair of generally vertical legs (29, 31) that are upstanding at the ends of the horizontal leg.

6. The cord anchor of claim 4 or 5 wherein the cross-section of the vertical legs (29, 31) is U-shaped.

7. The cord anchor of claim 4, 5 or 6 wherein the channel (25) has friction enhancing means (33, 35)

8. A Roman shade comprising:
- a panel (3) having a top (3A) for attachment to a header (5) and a bottom (3B);
- at least one pull cord (7, 9, 11, 107) attached at the bottom (3B) by a cord anchor (15, 115), which includes a connector (17, 117) for attaching the anchor to the bottom;
- a holder (19, 119) for connecting the pull cord to the anchor; and
- a clamp (21, 41) for releasably holding the pull cord on the holder;
- wherein the holder and clamp comprise a plug (23, 123) and socket (41, 141) combination and the connector is on either the holder or the clamp.
